# EUROPÄISCHE PATENTSCHRIFT

(11) **EP 1 522 009 B1**
(45) Veröffentlichungstag und Bekanntmachung des Hinweises auf die Patenterteilung: **08.12.2010**
(21) Anmeldenummer: 03763650.3
(22) Anmeldetag: 24.06.2003
(51) Int. Cl.: G06F 3/033, B60K 37/00

(54) **VERFAHREN ZUR STEUERUNG EINES BILDSCHIRMANZEIGESYSTEMS IN FAHRZEUGEN**
METHOD FOR CONTROLLING A SCREEN DISPLAY SYSTEM IN VEHICLES
PROCEDE POUR COMMANDER UN SYSTEME D'ECRAN D'AFFICHAGE DANS DES VEHICULES AUTOMOBILES

(30) Priorität: 12.07.2002 DE 10231619
(43) Veröffentlichungstag der Anmeldung: 13.04.2005
(73) Patentinhaber: Bayerische Motoren Werke Aktiengesellschaft, 80809 München (DE)
(72) Erfinder: KÜNZNER, Hermann, 85356 Freising (DE)
(86) Internationale Anmeldenummer: PCT/EP2003/006655
(87) Internationale Veröffentlichungsnummer: WO 2004/008305

(56) Entgegenhaltungen:
- EP-A- 0 607 731
- EP-A- 1 069 496
- DE-A- 3 836 555
- US-A1- 2001 019 338

## Beschreibung

Die Erfindung bezieht sich auf ein Verfahren zur Steuerung eines Bildschirmanzeigesystems in Fahrzeugen, mit einem willkürlich bedienbaren Stellglied, und mit einem abhängig von der Einstellung des Stellglieds auf einem Bildschirm wiedergebbaren Bildinformation, bei dem die in der Bildinformation enthaltene Bildinformationsmenge mittels des Stellglieds eingestellt wird.

Das Dokument EP 1 069 496 A2 offenbart eine multifunktionale Anzeige- und Bedieneinrichtung, wobei ein Steueurgerät Anzahl und/oder Dauer und/oder Kombinationen von Eingaben und Einstellungen erfaßt, daraus Präferenzen ableitet und in Abhängigkeit der Präferenzen zumindest eine Bedienstruktur und/oder eine Auswahlliste modifiziert.

Es ist aus der DE 38 36 555 A1 bekannt, mit dem Stellglied eine menuartige Bildinformation zu steuern. Bei der hierarchisch aus Menu, Untermenu und Funktionen und/oder Funktionswert bestehenden Menüstruktur wird mittels dem Stellglied der einzelne Menüpunkt angewählt, und eine zugeordnete Bildinformation auf einem Bildschirm wiedergegeben. Das Stellglied ist dabei primär zur Navigation durch die Menüstruktur eingesetzt. Die wiedergegebene Bildinformation ergibt sich in Folge des jeweils ausgewählten Knoten-(=Menü-)punkts der Funktions-(=Menü)hierarchie.

Bei der eingangs genannten Patentanmeldung wird erreicht, dass die wiedergebbare Bildinformation stärker den Informationsbedürfnissen des Fahrzeugbenutzers angepasst wird. Hierzu wird die in der Bildinformation enthaltene Bildinformationsmenge mittels des Stellglieds einstellbar gestaltet. Es ergeben sich dabei unterschiedliche Informationsmengen mit der Besonderheit, dass jede Bildinformationsmenge eine Untermenge jeder größeren Bildinformationsmenge ist.

Dabei besteht die Schwierigkeit, die den jeweiligen Stellungen des Stellglieds zugeordneten anzuzeigenden bzw. nicht anzuzeigenden Menüpunkte sinnvoll auszuwählen. Eine mehr theoretische Möglichkeit, die Informationsmenge zu steuern, besteht darin, die nicht benutzten Zweige der Menüstruktur auszublenden, so dass sich die Menüstruktur vereinfacht und der Nutzer nur noch die tatsächlich gewünschten Funktionen vorfindet. Das Wegnehmen von Teilen der Menüstruktur aber kann verwirren und die Orientierung im Menü beeinträchtigen.

Die Zuordnung der einzelnen Menüpunkte zu den verschiedenen Informationsmengen gestaltet sich auch deshalb besonders schwierig, weil verschiedene Nutzer verschiedene Nutzungsgewohnheiten besitzen und bei jedem Nutzer die Kenntnis des Systems eine Lemkurve durchläuft.

Der Erfindung liegt die Aufgabe zugrunde, ein Verfahren der eingangs genannten Art zu schaffen, das bei einer hierarchisch aufgebauten Menüstruktur, wie sie beispielsweise aus der De 38 36 555 A1 bekannt ist, eine entsprechend sinnvolle Auswahl der darzustellenden Informationsmenge vornimmt.

Die Erfindung löst diese Aufgabe mit den im Patentanspruch 1 abgegebenen Merkmalen.

Das Verfahren bildet die Nutzungsgewohnheiten des Nutzers ab. Es werden die Information über die Menüpunkte bzw. Menüzweige nacheinander ausgeblendet, die der Nutzer wahrscheinlich umso weniger benötigt. Die Notwendigkeit, den jeweiligen Menüpunkt zu benötigen, wird aus der Häufigkeit abgeleitet, mit der der Nutzer ihn bei vorausgehenden Betriebsfällen ausgewählt hat.

Die Recheneinheit, die für die Darstellung der Menüstruktur ohnehin vorhanden ist, erfasst die Nutzereingaben und wertet sie statistisch aus. Auf diese Weise werden die vom Nutzer beschrittenen "Informationspfade" (d.h. die eingeschlagenen Wege innerhalb der Menüstruktur) erfasst und nach Nutzungshäufigkeit gewichtet. Die weniger oder überhaupt nicht genutzten Pfade können zusätzlich grafisch gekennzeichnet werden, z. B. indem sie mit geringerem Kontrast dargestellt werden. Mit dem Stellglied kann der Nutzer nun seine Menüstruktur "dimmen", also die dargestellte Informationsmenge reduzieren. Handelt es sich beim Stellglied beispielsweise um einen aus der DE 3836555 A1 bekannten Drehschalter mit Raststellungen, werden durch das Drehen des Stellglieds um eine Raststellung die am schwächsten bewerteten Menüpunkte (d.h. die am seltensten oder gar nicht ausgewählten Menüpunkte) ausgeblendet, durch weiteres Drehen die nächste Kategorie usw. bis nur noch sehr häufig genutzte Menüpunkte/Funktionen angezeigt werden.

Dieser Vorgang kann jederzeit umgekehrt werden, indem das Stellglied in die andere Richtung gedreht wird und so die ausgeblendeten Menüpunkte wieder zum Vorschein bringt. Falls das System noch nie oder nur für sehr kurze Zeit benutzt wurde, besteht die Möglichkeit, ein Standardprofil für die Abfolge der Informationsmengen-"Dimmung" zu verwenden. Dieses Profil kann z. B. länderabhängig ermittelt werden, so dass regionale Gewohnheiten berücksichtigt werden. So besteht eine gute Ausgangsbasis, die sich durch die Nutzung im weiteren Verlauf dem Nutzer anpasst.

Für die Umsetzung des beschriebenen Menüsystems ist die statistische Erfassung von Auswahlhäufigkeiten erforderlich. Für jeden Menüpunkt wird eine Statistik geführt, in der dokumentiert ist, wie häufig oder wie regelmäßig er vom Nutzer gewählt wird.

Für die Erstellung dieser Statistik bieten sich verschiedene Lösungsmöglichkeiten an. Es kann vorteilhaft sein, zwischen den eigentlichen Funktionen (also z. B. dem Spielen eines Radiosenders) und der Navigation, also dem Finden des Menüpfades zu diesen Funktionen (z. B. dem Menüpunkt "alle Sender"), zu unterscheiden. Funktionen müssen in der statistischen Bewertung hochgestuft werden, wenn sie über lange Zeit benutzt werden (z. B. wenn der Radiosender für mehr als 5 Minuten gehört wird). Bei Funktionen, die während der Navigation (d.h. beim Durchlaufen der Menüpfade vorübergehend aufgesucht werden, ist das nicht aussagekräftig. Hier kann z. B. eine Hochstufung erfolgen, wenn die Funktion tatsächlich selektiert wurde.

Entsprechend können Menüpunkte auch heruntergestuft werden. Wenn z.B. ein Radiosender bei einem Senderwechsel nicht oder nur sehr kurz gewählt wird, erfolgt eine Herunterstufung.

Die für die Zuordnung der einzelnen Menüpunkte zu den Stellungen des Stellglieds maßgebliche Menü(punkte-)statistik wird fahrzeugschlüsselabhängig gespeichert. Damit ist es möglich, die Statistik nicht nur benutzerabhängig für die Auswahl der darzustellenden Menüpunkte einzusetzen, sondern sie auch benutzerindividuell zu pflegen, indem jeder neue Benutzungsfall in die individuelle Statistik jedes Nutzes eingeht. Voraussetzung hierfür ist, dass jeder Nutzer nur "seinen" Schlüssel verwendet.

Diese Statistik kann auch außerhalb des Fahrzeugs verwendet werden. Es wäre möglich, die tatsächliche Nutzungshäufigkeit von Funktionen und damit die Akzeptanz beim Kunden zu ermitteln: Wie häufig wird beispielsweise der Durchschnittsverbrauch 2 zurückgesetzt oder wie häufig erfolgt der Wechsel auf AM-Sender? Werden eher vorgegebene Radiostationen genutzt oder die vom Radio selbst wiedergegebene Liste der verfügbaren Radiostationen?

Mit der beschriebenen Methode ist es möglich, aus der Vielfalt von Funktionen, die kein Kunde jemals benötigt, die für eine Einzelperson wirklich wichtigen Funktionen in einer stark vereinfachten Menüstruktur darzustellen. Diese Struktur ist einerseits leichter verständlich und andererseits auch schneller zu bedienen. Regionale Ausprägungen in den Nutzungsgewohnheiten können problemlos ausgeglichen werden. Insgesamt ergibt sich ein Gewinn an Fahrsicherheit und Bedienkomfort.

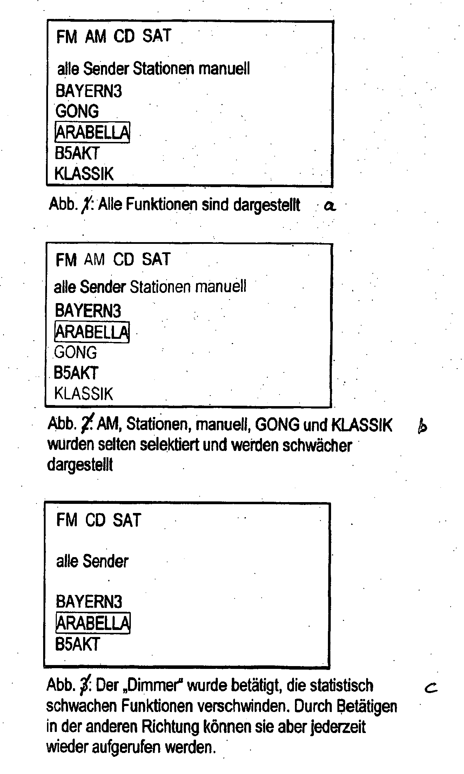

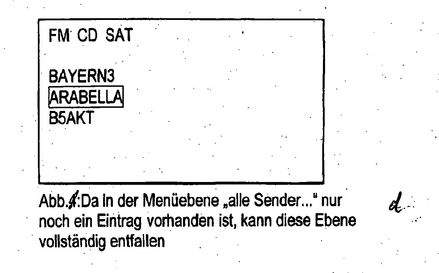

Ein Ausführungsbeispiel der Erfindung ist in der Zeichnung dargestellt und dient dazu, die Erfindung weiter zu erläutern. Es zeigt die einzige Fig. in den Teilen a bis d den Ablauf einer manuellen Steuerung der für eine Menüstruktur einstellbaren Informationsmengen.

In Fig. a ist für die Endstellung eines Stellglieds (nicht dargestellt) die Grundstellung einer Bildinformation gezeigt, die bei einer aus verschiedenen Menüs wie "Fahrtroutennavigation", "Heiz-/Klimaanlage", und "Unterhaltung" bestehenden Menüstruktur (nicht dargestellte) für das Menü "Unterhaltung" die gesamte zu diesem Menü bestehende Bildinformation zeigt. Es handelt sich um die Untermenüs FM-, AM-(Sender), CD (-Spieler) sowie SAT(-ellitenfemsehempfang).

In der nächsten Raststellung (Fig. b) des Stellglieds werden die Teile der Bildinformation optisch schwächer dargestellt, die während vorausgegangener Benutzungsfälle gar nicht oder selten gewählt wurden. Es sind dies (die) AM (-Sender) sowie die FM-Sender "GONG" und "KLASSIK".

Fig. c zeigt die Informationsmenge für die nächste Raststellung des Stellglieds. Die in Fig. b schwächer dargestellten Umfänge sind vollständig ausgeblendet, CD und SAT schwächer dargestellt. Damit wird optisch zum Ausdruck gebracht, dass die Funktionen CD und SAT noch etwas häufiger benutzt wurden als die bereits ganz ausgeblendeten Umfänge. Sie werden deshalb bei der ersten Dimmungsstufe noch nicht ausgeblendet.

Schließlich zeigt Fig. d die Reduktion der Informationsmenge auf die drei am häufigsten gewählten FM-Sender.

Nicht gezeigt ist die Möglichkeit, die Informationsmenge mit dem Stellglied noch weiter zu reduzieren und nur noch den Sender anzuzeigen, der insgesamt am häufigsten ausgewählt wurde.

Zur Unterscheidung zwischen dem eigentlichen Einstellmode mit Hilfe des Stellglieds und der Steuerung der Menge der dargestellten Bildschirminformation kann ein separater Schalter (nicht dargestellt) vorgesehen sein. Alternativ kann hierfür auch eine geänderte Betriebsweise des Stellglieds (z.B. durch Herausziehen) eingestellt und so mit einem Stellglied die Auswahl der Funktionen und die Steuerung der nutzerspezifischen Bildinhalte erreicht werden.

Bei einer evtl. Konkurrenz von bevorzugtem und momentan ausgewähltem Menüpunkt, d.h. bei Einstellung eines an sich selten ausgewählten Menüpunkts gilt folgende Regel:
Der aktuell eingestellte Menüpunkt wird stets angezeigt. Für den kritischen Fall gilt dann folgender Ablauf: Erst wenn ein anderer Menüpunkt ausgewählt wird, wird der bis dahin ausgewählte Menüpunkt ggf. nicht mehr angezeigt. An Stelle oder aber ergänzend zu der Häufigkeit, die für die Statistik herangezogen wird, kann auch die Dauer, mit der der Menüpunkt ausgewählt wurde berücksichtigt werden. Es wird dabei eine Betriebsdauerstatistik zu Grunde gelegt. Es wurde beispielsweise ein Sender X 5 Stunden gehört. Ein Sender Y wurde zwar häufiger selektiert, erreichte aber nur eine Hördauer von 2 Stunden. In der Anzeige entsprechend Fig. d wird dann nur Sender X angezeigt.

Auch können situative Parameter berücksichtigt werden: morgens wird immer B5A gehört, abends immer Klassik, d.h. in Abhängigkeit der Tageszeit ergeben sich unterschiedliche Wahrscheinlichkeiten für die Auswahl bestimmter Menüpunkte. Andere Parameter, wie Wochenende oder Wochentag, Länge der geplanten Reise, Anzahl der Personen im Fahrzeug usw. können ebenfalls berücksichtigt werden.

## Patentansprüche

1. Bildschirmanzeigesystem für ein Fahrzeug,
- mit einem Bildschirm zur Darstellung von Menüpunkten,
- mit einem durch den Nutzer bedienbaren Stellglied zur Steuerung der grafischen Darstellung einer hierarchischen Menüstruktur, welche Menüpunkte umfasst, auf dem Bildschirm,
- wobei für Menüpunkte eine Statistik geführt wird, welche dokumentiert, wie häufig der Menüpunkt vom Nutzer in vorausgehenden Betriebsfällen ausgewählt wurde.
- wobei die Anzahl dargestellten Menüpunkte durch das Stellglied derart reduzierbar ist, dass zunächst die Kategorie der in vorausgehenden Betriebsfällen am seltensten oder gar nicht ausgewählten Menüpunkte ausgeblendet wird, und dann die nächste Kategorie von Menüpunkten ausgeblendet wird usw. bis nur noch die Kategorie der sehr häufig genutzten Menüpunkte dargestellt wird, und
- wobei diese Vorgang unkehrbar ist.

2. System nach Anspruch 1, **dadurch gekennzeichnet, dass** die Häufigkeit zusätzlich abhängig von der Dauer, während der jeweilige Menüpunkt ausgewählt ist, gewichtet ist.

3. System nach Anspruch 2, **dadurch gekennzeichnet, dass** zusätzlich die optische Intensität, mit der der jeweilige Menüpunkt dargestellt ist, mittels des Stellglieds veränderbar ist.

## Claims

1. A screen display system for a vehicle,
- with a screen for displaying menu items,
- with an actuator, which can be operated by the user, for controlling the graphic display of a hierarchical menu structure, which comprises menu items, on the screen,
- wherein a statistic is maintained for menu items, which documents how frequently the menu item has been selected by the user in preceding operating cases,
- wherein the number of shown menu items can be reduced by the actuator in such a way that the category of menu items selected most seldom or not at all in preceding operating cases is firstly hidden, and then the next category of menu items is hidden and so on, until only the category of very frequently used menu items is shown, and
- wherein this process can be reversed.

2. A system according to claim 1, **characterised in that** the frequency is also weighted as a function of the period, during which the respective menu item is selected.

3. A system according to claim 2, **characterised in that** the optical intensity, with which the respective menu item is shown, can be changed by means of the actuator.

## Revendications

1. Système d'affichage sur écran pour un véhicule automobile comprenant :
- un écran pour représenter des points d'un menu,
- un organe d'actionnement commandé par l'utilisateur pour commander la représentation graphique d'une structure hiérarchisée de menu, comprenant les points du menu sur l'écran,
- selon lequel, on établit une statistique des points du menu qui documentent la fréquence selon laquelle l'utilisateur a sélectionné les points du menu au cours de situations de fonctionnement antérieures,
- selon lequel, on réduit le nombre des points de menu présentés par l'organe d'actionnement de façon à éliminer tout d'abord les catégories des points de menu qui ont été utilisés le plus rarement voire pas du tout, dans des cas de fonctionnement précédents, et
- on élimine ensuite la catégorie suivante des points du menu, etc.., jusqu'à ne représenter que la catégorie des points de menu utilisés le plus fréquemment, et
- cette opération est réversible.

2. Système selon la revendication 1,
**caractérisé en ce qu'**
on pondère la fréquence en plus selon la durée pendant laquelle les points de menu respectifs ont été sélectionnés.

3. Système selon la revendication 2,
**caractérisé en ce qu'**
en plus, l'organe de réglage peut modifier l'intensité optique d'affichage des points respectifs du menu.
